# FASCICULE DE BREVET EUROPEEN

(11) **EP 1 712 769 B1**
(45) Date de publication et mention de la délivrance du brevet: **11.06.2008**
(21) Numéro de dépôt: 06290552.6
(22) Date de dépôt: 05.04.2006
(51) Int. Cl.: F02K 1/82

(54) **Tuyère d'éjection d'un moteur d'engin volant**
Schubdüse eines Flugzeugtriebwerkes
Exhaust nozzle of an aircraft engine

(30) Priorité: 14.04.2005 FR 0503716
(43) Date de publication de la demande: 18.10.2006
(73) Titulaire: SNECMA, 75015 Paris (FR)
(72) Inventeur: Beutin, Bruno, 91000 Evry (FR); Fert, Jérémy, 75012 Paris (FR)
(74) Mandataire: Ramey, Daniel

(56) Documents cités:
- FR-A- 1 456 926
- GB-A- 744 196
- US-B1- 6 679 048

## Description

La présente invention concerne une tuyère d'éjection d'un moteur d'engin volant, cette tuyère étant du type « bifide » et comprenant un corps tubulaire à deux canaux de sortie, délimitant en amont une veine primaire d'écoulement de gaz partagée en aval en deux veines secondaires parallèles d'écoulement de gaz.

Une tuyère de ce type permet de masquer le signal infrarouge émis par le moteur et réduit les risques de détection de l'engin volant par des capteurs infrarouge.

La commande en lacet d'un engin volant est assurée en général au moyen de gouvernes orientables dont les déplacements sont détectables par un radar. Pour réduire le risque de détection radar de l'engin volant, il a déjà été proposé de supprimer les gouvernes et d'équiper la tuyère de conduits d'injection d'air qui sont montés sur l'extérieur de la tuyère et débouchent dans celle-ci pour dévier le flux de gaz passant dans la tuyère au moyen d'un débit d'air injecté transversalement ou en oblique dans ce flux de gaz.

Cependant, ces moyens connus ne sont pas adaptés à une tuyère « bifide » du type précité.

On connait également de US 6679048 un dispositif de contrôle de la direction d'un flux primaire sortant d'une tuyère unique par l'injection d'un flux secondaire.

L'invention a notamment pour but d'apporter une solution simple, efficace, et économique à ce problème, et a pour objet une tuyère d'éjection « bifide » qui permet d'améliorer les performances en vol et la précision de pilotage de l'engin volant équipé de cette tuyère tout en réduisant efficacement les risques de détection radar et infrarouge.

Elle propose à cet effet une tuyère d'éjection d'un moteur d'engin volant, comprenant un corps tubulaire à deux canaux de sortie délimitant en amont une veine primaire d'écoulement de gaz partagée en aval en deux veines secondaires parallèles d'écoulement de gaz, caractérisée en ce que les canaux de sortie comprennent des moyens d'orientation de poussée, constitués par des boîtiers d'injection de gaz dans les veines secondaires précités, ces boîtiers étant fixés sur des parois latérales des canaux de sortie dans un espace intermédiaire formé entre les parties aval de ces canaux de sortie et comportant chacun une fenêtre alignée avec une fente formée dans la paroi précitée du canal de sortie correspondant, et des moyens commandés de réglage du débit de gaz injecté par ladite fenêtre dans la veine secondaire.

Les boîtiers d'injection sont ainsi montés entre les canaux de sortie pour injecter du gaz sous pression dans les veines secondaires dans des directions orientées vers l'extérieur par rapport à l'axe du moteur. L'injection de gaz par un boîtier dans une veine secondaire permet de dévier la poussée vers la gauche, et l'injection de gaz par l'autre boîtier dans l'autre veine secondaire permet de dévier la poussée vers la droite.

Les boîtiers d'injection de gaz sont par exemple alimentés en gaz sous pression à partir d'un collecteur annulaire installé autour de la confluence du moteur.

De façon simple, les moyens commandés de réglage comprennent, dans chaque boîtier, un volet monté pivotant à l'intérieur du boîtier entre une position d'obturation et une position d'ouverture de la fenêtre et relié à des moyens d'actionnement, tels qu'un vérin par exemple, situés à l'extérieur du boîtier.

L'obturation réglable de la fenêtre permet de régler le débit de gaz injecté dans la veine secondaire.

Le volet est par exemple monté pivotant le long d'un bord de la fenêtre au moyen d'un axe dont une extrémité extérieure au boîtier est reliée aux moyens d'actionnement précités et dont l'autre extrémité est guidée dans un palier monté dans le boîtier.

Dans la position d'obturation de la fenêtre, le volet assure préférentiellement une continuité de la surface intérieure du canal de sortie, afin de ne pas perturber l'écoulement de gaz dans ce canal.

Des joints d'étanchéité peuvent être montés autour de la fenêtre entre le boîtier et la paroi du canai de sortie et au niveau de l'axe de pivotement du volet.

Dans un mode de réalisation préféré de l'invention, les boîtiers d'injection de gaz dans les canaux de sortie sont chacun alimentés en gaz sous pression par un conduit débouchant dans le boîtier dans une direction sensiblement perpendiculaire à l'axe du moteur et à l'axe de lacet de l'engin volant et orientée vers l'extérieur par rapport à l'axe du moteur.

D'autres détails, caractéristiques et avantages de la présente invention apparaîtront à la lecture de la description suivante faite à titre d'exemple non limitatif en référence aux dessins annexés dans lesquels :
- la figure 1 est une vue schématique en perspective d'un moteur d'engin volant équipé d'une tuyère selon l'invention, vue de l'aval,
- la figure 2 est une vue partielle agrandie de la figure 1 et représente un boîtier d'injection de gaz dans une veine secondaire de la tuyère,
- la figure 3 est une vue correspondant à la figure 2 avec arrachement partiel du boîtier, et représente des moyens commandés de réglage du débit de gaz injecté dans la veine secondaire,
- la figure 4 est une vue schématique en perspective à plus grande échelle de ces moyens commandés de réglage.

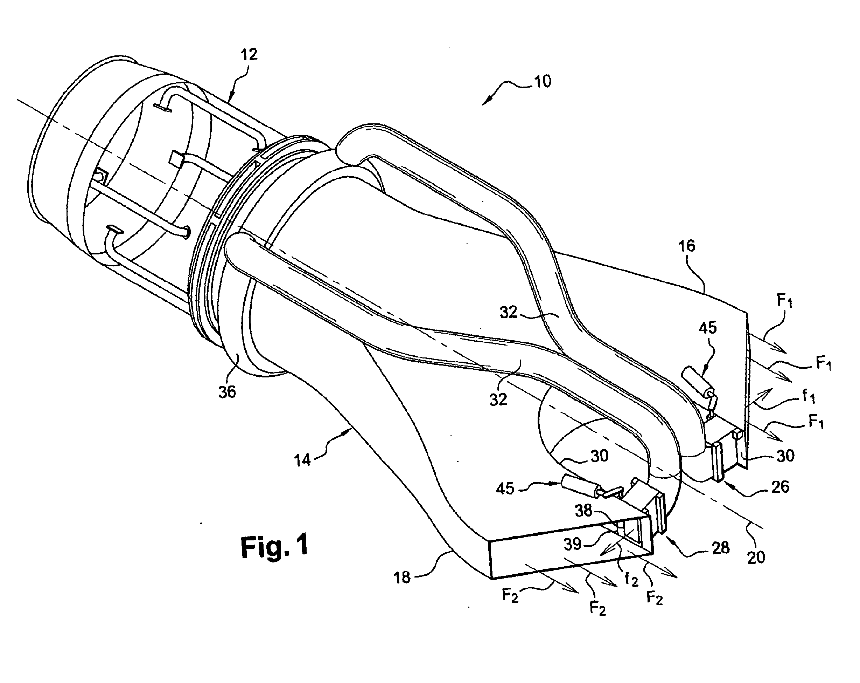

On a représenté en figure 1 un moteur d'engin volant 10 de type drone, comprenant un carter cylindrique extérieur 12 et une tuyère 14 montée à l'extrémité aval du carter 12 pour l'éjection des gaz de combustion provenant du moteur.

La tuyère 14 est une tuyère « bifide » et comprend un corps tubulaire à deux canaux de sortie 16, 18, ainsi que des moyens d'orientation de poussée pour la commande de l'engin volant en lacet.

Le corps de la tuyère 14 délimite en amont une veine primaire d'écoulement de gaz à section transversale circulaire, qui est partagée en aval en deux veines secondaires d'écoulement de gaz à section transversale sensiblement rectangulaire.

Les canaux de sortie 16, 18 s'étendent parallèlement et à distance l'un de l'autre de chaque côté de l'axe longitudinal 20 du moteur et de la tuyère. Les flux de gaz qui s'écoulent dans les canaux de sortie 16, 18 sont représentés par les flèches F₁ et F₂, respectivement.

L'orientation de la poussée est réalisée par injection de gaz dans une direction donnée dans un canal de sortie 16 ou 18 et par déviation du flux de gaz F₁ ou F₂ vers l'extérieur par rapport à l'axe du moteur 20.

Chaque canal de sortie 16, 18 est équipé d'un boîtier d'injection 26, 28 fixé au voisinage de l'extrémité aval du canal de sortie, sur une paroi latérale 30 de ce canal et dans un espace intermédiaire situé entre les parties aval des canaux de sortie. Ces parois latérales 30 sont parallèles entre elles et à l'axe 20 du moteur dans leurs parties aval et se rejoignent en amont sur l'axe 20.

Chaque boîtier 26, 28 est alimenté en gaz par un conduit 32 qui s'étend le long de la tuyère 14 entre une extrémité aval fixée sur une paroi du boîtier par des vis 34, et qui débouche vers l'extérieur par rapport à l'axe 20 du moteur, perpendiculairement à celui-ci, et une extrémité amont raccordée à un collecteur annulaire 36 installé autour de la confluence du moteur pour le prélèvement de gaz sous pression.

La paroi 37 du boîtier 26, 28 plaquée et fixée par des moyens appropriés sur la paroi 30 du canal de sortie, comporte une fenêtre 38 qui est alignée avec une fente 39 de forme correspondante formée dans la paroi 30 du canal de sortie pour l'injection de gaz depuis le boîtier vers l'extérieur par rapport à l'axe 20 du moteur.

En figure 1, la flèche f₁ représente la direction d'injection de gaz par la fenêtre du boîtier 26 dans le canal de sortie 16, et la flèche f₂ représente la direction d'injection de gaz par la fenêtre du boîtier 28 dans le canal de sortie 18.

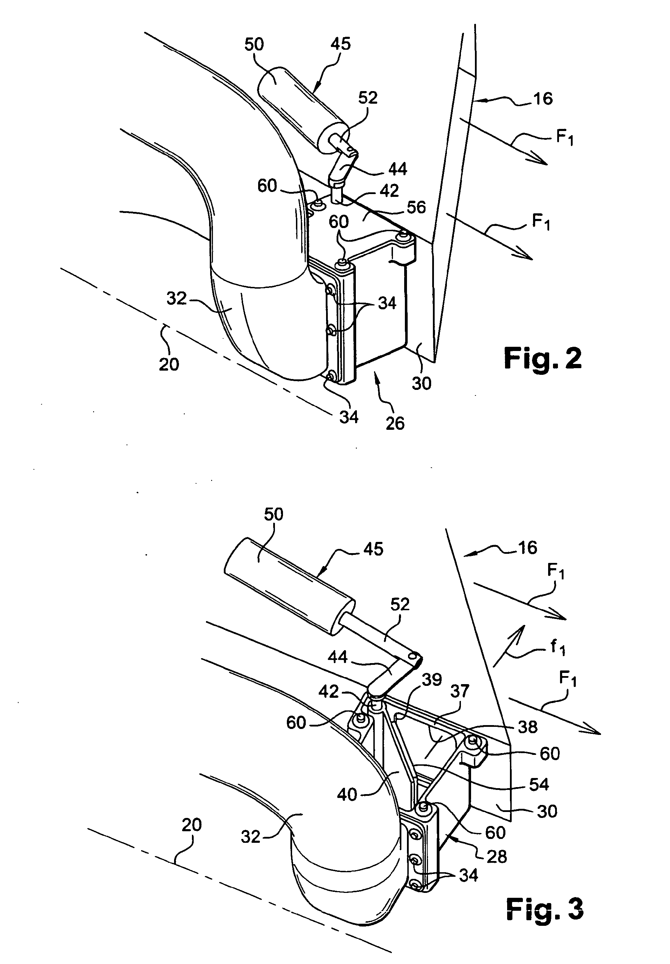

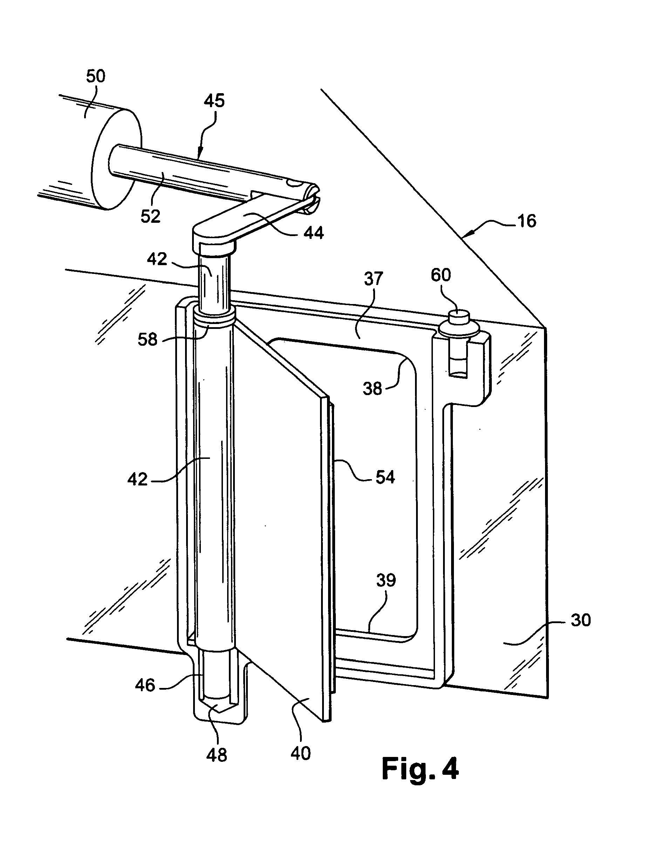

Les moyens commandés de réglage du débit de gaz injecté comprennent un volet 40 monté pivotant à l'intérieur du boîtier entre une position d'ouverture et une position d'obturation de la fenêtre 38 (figures 3 et 4).

Un bord amont du volet 40 est solidaire d'un axe 42 s'étendant le long d'un bord de la fenêtre, perpendiculairement à l'axe du moteur 20 et au flux de gaz f₁ (figure 3), et comprenant une extrémité extérieure au boîtier qui est reliée par une biellette 44 à des moyens 45 d'actionnement du pivotement du volet, et dont l'autre extrémité est guidée dans un palier 46 monté dans un trou borgne 48 du boîtier.

Les moyens d'actionnement sont, dans l'exemple représenté, un vérin 45 dont le cylindre 50 est fixé sur la paroi externe de la tuyère 14 et dont la tige de piston 52 est articulée sur une extrémité de la biellette 44.

Les figures 2 et 3 représentent des positions d'ouverture de la fenêtre 38, dans lesquelles le volet est incliné à 45° environ par rapport à l'axe du moteur 20.

Le bord périphérique du volet 40 est destiné à venir en appui sur la paroi 37 du boîtier comportant la fenêtre 38 en position d'obturation de celle-ci, et sa partie centrale forme une surépaisseur 54 qui vient s'emboîter dans la fenêtre 38 pour assurer la continuité de la surface intérieure du canal de sortie (figure 4).

Des joints d'étanchéité sont montés autour de la fenêtre 38, entre la paroi 37 du boîtier et la paroi 30 du canal de sortie, et l'extrémité de l'axe 42 reliée à une extrémité de la biellette 44 traverse un couvercle 56 du boîtier de façon étanche grâce au montage d'un joint annulaire 58 dans l'orifice du couvercle du boîtier. Le couvercle 56 est fixé par des vis 60 sur le boîtier.

Les flux de gaz f₁, f₂ peuvent être injectés dans les canaux de sortie 16, 18 dans une direction perpendiculaire au flux de gaz F₁, F₂, comme représenté en figures 1 et 3, ou dans une direction oblique.

En fonctionnement, les volets 40 des deux boîtiers sont maintenus dans leur position d'obturation des fenêtres 38 quand l'engin volant se déplace sur une trajectoire rectiligne. L'un des volets 40 est amené dans une position d'ouverture pour dévier l'engin volant d'un côté de sa trajectoire rectiligne, le degré d'ouverture du volet réglant le débit de gaz injecté dans le canal de sortie correspondant, et donc la déviation de l'engin volant.

L'ouverture du volet du boîtier fixé sur le canal de sortie de gauche commande la déviation vers la gauche et l'ouverture du volet du boîtier fixé sur le canal de sortie de droite commande la déviation vers la droite.

## Revendications

1. Tuyère d'éjection (14) d'un moteur d'engin volant, comprenant un corps tubulaire à deux canaux de sortie (16, 18) délimitant en amont une veine primaire d'écoulement de gaz partagée en aval en deux veines secondaires parallèles d'écoulement de gaz, les canaux de sortie (16, 18) comprenant des moyens d'orientation de poussée, constitués par des boîtiers (26, 28) d'injection de gaz dans les veines secondaires précités, ces boîtiers (26, 28) étant fixés sur des parois latérales (30) des canaux de sortie (16, 18) dans un espace intermédiaire formé entre les parties aval de ces canaux de sortie et comportant chacun une fenêtre (38) alignée avec une fente (39) formée dans la paroi (30) précitée du canal de sortie correspondant (16, 18), et des moyens commandés de réglage du débit de gaz injecté par ladite fenêtre (38) dans la veine secondaire.

2. Tuyère selon la revendication 1, **caractérisée en ce que** lesdits moyens commandés de réglage comprennent un volet (40) monté pivotant à l'intérieur du boîtier (26, 28) entre une position d'obturation et une position d'ouverture de la fenêtre (38), et relié à des moyens d'actionnement, tels qu'un vérin (45) par exemple, situés à l'extérieur du boîtier (26, 28).

3. Tuyère selon la revendication 2, **caractérisée en ce que** le volet (40) est monté pivotant le long d'un bord de la fenêtre (38) au moyen d'un axe (42) dont une extrémité extérieure au boîtier (26, 28) est reliée aux moyens d'actionnement précités et dont l'autre extrémité est guidée dans un palier (46) monté dans le boîtier.

4. Tuyère selon la revendication 2 ou 3, **caractérisée en ce que**, dans la position d'obturation de la fenêtre (38), le volet (40) assure une continuité de la surface intérieure du canal de sortie (16, 18).

5. Tuyère selon la revendication 3 ou 4, **caractérisée en ce que** des joints d'étanchéité sont montés autour de la fenêtre (38) entre le boîtier (26, 28) et la paroi du canal de sortie (16, 18) et au niveau de l'axe (42) de pivotement du volet (40).

6. Tuyère selon l'une des revendications précédentes, **caractérisée en ce que** le boîtier (26, 28) est situé au voisinage de l'extrémité aval du canal de sortie (16, 18).

7. Tuyère selon l'une des revendications précédentes, **caractérisée en ce que** les boîtiers d'injection (26, 28) de gaz dans les canaux de sortie (16, 18) sont chacun alimentés en gaz sous pression par un conduit (32) débouchant dans le boîtier (26, 28) dans une direction sensiblement perpendiculaire à l'axe (20) du moteur et à l'axe de lacet de l'engin volant et orientée vers l'extérieur par rapport à l'axe (20) du moteur.

8. Tuyère selon la revendication 7, **caractérisée en ce que**, dans chaque canal de sortie (16, 18), l'injection de gaz depuis le boîtier (26, 28) est orientée vers l'extérieur par rapport à l'axe (20) du moteur.

9. Tuyère selon l'une des revendications précédentes, **caractérisée en ce que** les boîtiers (26, 28) sont alimentés en gaz sous pression à partir d'un collecteur annulaire (36) installé autour de la confluence du moteur.

## Claims

1. Exhaust nozzle (14) for an engine of a flying craft, comprising a tubular body with two outlet ducts (16, 18) defining, in the upstream direction, a primary gas flow path divided, in the downstream direction, into two parallel secondary gas flow paths, the outlet ducts (16, 18) comprising thrust vectoring means comprising boxes (26, 28) for injecting gas into the aforementioned secondary paths, these boxes (26, 28) being attached to lateral walls (30) of the outlet ducts (16, 18) in an intermediate space formed between the downstream sections of these outlet ducts and each having a window (38) aligned with a slot (39) formed in the aforementioned wall (30) of the corresponding outlet duct (16, 18), and controlled means for adjusting the outflow of gas injected through the said window (38) into the secondary path.

2. Exhaust nozzle according to Claim 1, wherein the said controlled adjusting means comprise a flap (40) pivotally mounted inside the box (26, 28) between a position in which it closes off the window (38) and a position in which it opens the latter, this flap being connected to actuating means, such as a ram (45) for example, which are situated outside the box (26, 28).

3. Exhaust nozzle according to Claim 2, wherein the flap (40) is pivotally mounted along an edge of the window (38) by means of a pin (42) having one end outside the box (26, 28) connected to the aforementioned actuating means and the other end guided in a bearing (46) mounted in the box.

4. Exhaust nozzle according to Claim 2 or 3, wherein, when the window (38) is in the closed-off position, the flap (40) provides a continuity of the inner surface of the outlet duct (16, 18).

5. Exhaust nozzle according to Claim 3 or 4, wherein seals are mounted around the window (38) between the box (26, 28) and the wall of the outlet duct (16, 18) and on the pivot pin (42) of the flap (40) .

6. Exhaust nozzle according to any preceding claims, wherein the box (26, 28) is situated in the vicinity of the downstream end of the outlet duct (16, 18).

7. Exhaust nozzle according to any preceding claims, wherein the boxes (26, 28) for injecting gas into the outlet ducts (16, 18) are each supplied with pressurized gas via a pipe (32) opening into the box (26, 28) in a direction substantially perpendicular to the axis (20) of the engine and to the yaw axis of the flying craft and directed outwardly with respect to the axis (20) of the engine.

8. Exhaust nozzle according to Claim 7, wherein, in each outlet duct, the injection of gas from the box is directed outwardly with respect to the axis of the engine.

9. Exhaust nozzle according to any preceding claims, wherein the boxes (26, 28) are supplied with pressurized gas from an annular manifold (36) installed around the confluence of the engine.

## Patentansprüche

1. Strahldüse (14) für ein Flugzeugtriebwerk, die einen rohrförmigen Körper mit zwei Ausgangskanälen (16, 18) aufweist, die stromaufwärts eine Primärgasabflußader abgrenzen, die stromabwärts in zwei parallele Sekundärgasabflußadern aufgeteilt ist, wobei die Ausgangskanäle (16, 18) Mittel zur Schuborientierung aufweisen, die durch Gehäuse (26, 28) zum Einspritzen von Gas in die obengenannten Sekundäradern gebildet sind, wobei diese Gehäuse (26, 28) an den Seitenwänden (30) der Ausgangskanäle (16, 18) in einem Zwischenraum befestigt sind, der zwischen den stromabwärts gelegenen Teilen dieser Ausgangskanäle gebildet ist und jeweils ein Fenster (38) aufweisen, das mit einem Spalt (39) ausgerichtet ist, der in der obengenannten Wand (30) des entsprechenden Ausgangskanals (18, 18) gebildet ist, und gesteuerte Mittel zum Regeln des Gasdurchsatzes, der durch das Fenster (38) in die Sekundärader eingespritzt wird.

2. Düse nach Anspruch 1, **dadurch gekennzeichnet, daß** die gesteuerten Regelungsmittel eine Klappe (40) aufweisen, die schwenkbar im Inneren des Gehäuses (26, 28) zwischen einer Position zum Verschließen und einer Position zum Öffnen des Fensters (38) angebracht und mit Betätigungsmitteln wie beispielsweise einem Zylinder (45) verbunden ist, die außerhalb des Gehäuses (26, 28) liegen.

3. Düse nach Anspruch 2, **dadurch gekennzeichnet, daß** die Klappe (40) entlang eines Randes des Fensters (38) mittels einer Achse (42) schwenkbar angebracht ist, von welcher ein Ende außerhalb des Gehäuses (26, 28) mit den obengenannten Betätigungsmitteln verbunden ist, und von welcher das andere Ende in einem Lager (46) geführt wird, das in dem Gehäuse angebracht ist.

4. Düse nach Anspruch 2 oder 3, **dadurch gekennzeichnet, daß** in der Position zum Verschließen des Fensters (38) die Klappe (40) eine Kontinuität der Innenfläche des Ausgangskanals (16, 18) gewährleistet.

5. Düse nach Anspruch 3 oder 4, **dadurch gekennzeichnet, daß** Dichtungen um das Fenster (38) zwischen dem Gehäuse (26, 28) und der Wand des Ausgangskanals (16, 18) sowie auf Höhe der Schwenkachse (42) der Klappe (40) angebracht sind.

6. Düse nach einem der vorhergehenden Ansprüche, **dadurch gekennzeichnet, daß** das Gehäuse (26, 28) in der Nähe des stromabwärts gelegenen Endes des Ausgangskanals (16, 18) liegt.

7. Düse nach einem der vorhergehenden Ansprüche, **dadurch gekennzeichnet, daß** die Gehäuse (26, 28) zum Einspritzen von Gas in die Ausgangskanäle (16, 18) jeweils durch eine Leitung (32) mit unter Druck stehendem Gas versorgt werden, die in das Gehäuse (26, 28) in einer Richtung mündet, die im wesentlichen senkrecht zu der Achse (20) des Motors und zu der Gierachse des Flugzeugs liegt und bezüglich der Achse (20) des Motors nach außen orientiert ist.

8. Düse nach Anspruch 7, **dadurch gekennzeichnet, daß** in jedem Ausgangskanal (16, 18) die Einspritzung von Gas aus dem Gehäuse (26, 28) bezüglich der Achse (20) des Motors nach außen orientiert ist.

9. Düse nach einem der vorhergehenden Ansprüche, **dadurch gekennzeichnet, daß** die Gehäuse (26, 28) ausgehend von einem ringförmigen Sammler (36) mit unter Druck stehendem Gas versorgt werden, der um die Konfluenz des Motors installiert ist.
